# EUROPEAN PATENT SPECIFICATION

(11) **EP 1 080 134 B1**
(45) Date of publication and mention of the grant of the patent: **01.12.2004**
(21) Application number: 99925584.7
(22) Date of filing: 11.05.1999
(51) Int. Cl.: C08J 3/03

(54) **SILICONE DISPERSIONS AND PROCESS FOR MAKING THEM**
SILIKONDISPERSIONEN UND HERSTELLUNGSVERFAHREN
DISPERSIONS ET LEUR PROCEDE DE FABRICATION

(30) Priority: 11.05.1998 GB 9810060
(43) Date of publication of application: 07.03.2001
(73) Proprietor: S.C.Johnson & Son, Inc, Racine, WI 53403 (US)
(72) Inventor: BINKS, Bernard Paul, Walkington, East Yorkshire HU17 8XX (GB); DONG, Jinseng, Hull HU6 7SL (GB)
(74) Representative: Carpmaels & Ransford
(86) International application number: PCT/US1999/010281
(87) International publication number: WO 1999/058596

(56) References cited:
- EP-A- 0 490 582
- US-A- 5 556 628
- DATABASE WPI Section Ch, Week 8213 Derwent Publications Ltd., London, GB; Class A18, AN 82-24757E XP002112216 & JP 57 029681 A (TEIJIN LTD), 17 February 1982 (1982-02-17)

## Description

### Technical Field

The present invention relates to dispersions of silicon compounds and to a process for making them.

### Background Art

Ordinary emulsions contain dispersed drops in the micrometre range and are unstable over time, although the shelf life may be adequate for most purposes. They are inherently turbid. However, the amount of scattered light is dependent on the difference in refractive index between the dispersed phase and the continuous phase. It is possible to obtain transparent emulsions by selecting materials whose refractive indices match. However, materials which may be useful components of liquid products containing a dispersed phase may have refractive indices which are sufficiently different from one another that a non-turbid dispersion is not obtained in a conventional emulsion.

Micro-emulsions contain a dispersed phase with a droplet size of the order of nanometers, as opposed to the micrometers of conventional emulsions. They are stable indefinitely and are not turbid even if the refractive indices of the dispersed phase and the continued phase do not match. They form spontaneously on mixing the components but it is difficult to predict the combination of water-insoluble components (oil phase) and surfactant required to prepare them.

Aqueous emulsions containing polydimethyl siloxanes (PDMS) may be used for various purposes. Thus US 5,017,221 discloses that aqueous emulsions of polydimethyl siloxane fluids (i.e. PDMS) have been used as a protective coating on many surfaces including rubber, vinyl, plastic, leather, and sealed wood, and refers to US 3,956,174 and US 4,133,921 as showing such compositions.

US-A-5 556 628 discloses storage-stable, pseudoplastic free-flowing cosmetic compositions/formulations, comprising a stable and homogeneous suspension, in water, of water-insoluble particulates, and which further comprise at least one anionic surfactant, at least one nonionic or amphoteric cosurfactant and at least one electrolyte, these surfactants being present in such amounts as to impart pseudoplasticity thereto with a yield point of at least 0.2 Pa and constituting spherulites suspended within a lamellar phase.

JP-A-57 029 681 discloses a method for improving the color depth of dyed polyester fabrics wherein the polyester fabrics are reduction-washed whereby a cationic compound is adhered to said polyester fabrics, and the resulting dyed fabrics are treated with a treating bath prepared by emulsifying or dispersing a hydrophobic polymer having a refractive index lower than that of polyester fibers. Polymers include silicon compounds, such as polydimethylsiloxane, the only example given having a viscosity of 10⁻³m²/s (1000 centistokes). Acids and/or anionic surfactants are suitable as emulsifiers and/or dispersing agents. The emulsion or dispersion may contain an electrolyte, preferably potassium bisulfate. When a cationic compound exists on the fiber surface or an electrolyte is added to the bath, the balance of forces is destroyed so as to largely reduce the dispersion stability.

It would be desirable to be able to prepare aqueous dispersions containing water-immiscible silicone liquids, e.g. polydimethyl silicone, with improved transparency and stability. It is particularly desirable to produce aqueous dispersions with improved transparency and stability which contain significant amounts of silicone liquids. However, dispersions prepared from polydimethyl silicone, water, and an anionic surfactant are generally turbid.

### Disclosure of Invention

According to the present invention an aqueous dispersion comprising water containing from 0.01 to 0.1M of a dissolved electrolyte, the water being substantially free of divalent cations; a separate liquid phase of an incompatible silicone having a viscosity in the range 5x10⁻⁷ m²/s to 10⁻⁴ m²/s (0.5 to 100 centistokes) at 25°C; and from 5 to 100mM of stabilizing anionic surfactant, wherein the anionic surfactant is a salt of a diester of sulfosuccinic acid, the anionic surfactant being the only surfactant present in the dispersion.

According to a further aspect of the present invention, a process for forming an aqueous dispersion comprising water, a separate liquid phase of an incompatible silicone and a surfactant the process comprising: (a) forming an aqueous phase by mixing water with from 0.01 to 0.1M dissolved electrolyte, the water being substantially free of divalent cations; (b) introducing from 5 to 100mM of stabilizing anionic surfactant, wherein the anionic surfactant is a salt of a diester of sulfosuccinic acid, into the aqueous phase; (c) bringing liquid incompatible silicone having a viscosity in the range 5x10⁻⁷ m²/s to 10⁻⁴ m²/s (0.5 to 100 centistokes) at 25°C into contact with the aqueous phase; and (d) wherein anionic surfactant is the only surfactant present in the dispersion.

According to a still further aspect of the present invention, a process for forming an aqueous dispersion comprising a separate continuous liquid phase of an incompatible silicone, water dispersed within the silicone, and a surfactant the process comprising: (a) forming an aqueous phase by mixing water with from 0.01 to 0.1M of a dissolved electrolyte, the water being substantially free of divalent cations; (b) forming a silicone oil phase by mixing an incompatible silicone having a viscosity in the range 5x10⁻⁷ m²/s to 10⁻⁴ m²/s (0.5 to 100 centistokes) at 25°C and from 5 to 100mM of stabilizing anionic surfactant, wherein the anionic surfactant is a salt of a diester of sulfosuccinic acid; (c) introducing the aqueous phase into the silicone oil phase with agitation; and (d) wherein anionic surfactant is the only surfactant present in the dispersion.

According to yet another aspect of the present invention, a method of treating a surface by applying to the surface an aqueous dispersion of the invention.

We have found that in order to have a possibility of obtaining a dispersion of increased stability when using an anionic surfactant, it is necessary to use water containing sufficient dissolved electrolyte instead of pure water. Not all anionic surfactants will give improved stability even in the presence of dissolved electrolyte, accordingly, the anionic surfactant is a salt of a diester of sulfosuccinic acid.

When reference is made in this specification to improve stability, the improvement is determined by comparison with the corresponding composition containing pure water without dissolved electrolyte. Improved stability is most readily indicated by improved clarity of the dispersion, which may also have a blue tinge. It will be understood that the dispersion must remain as a dispersion. The separation of a turbid dispersion into two clear layers does not represent an improvement in stability.

Improved stability may also be indicated by improved storage life (often referred to as "shelf life") before the dispersion separates into its components. However, as many conventional emulsions have relatively long storage lives, it may not be practicable to use storage life as a routine measure of stability.

It is believed that the present invention makes possible the preparation of dispersions which are true microemulsions. In such cases instrumental determination of the droplet size of the dispersed phase may be used to give a more precise indication of the improvement given by the present invention.

An "incompatible" silicone is one which does not disperse in water in the absence of a separate surfactant, as is explained in more detail below.
It may be desirable to use water which is substantially free of ions as the basis of the dispersion so as to be able to control the nature of the electrolyte more closely, and to avoid the formation of insoluble salts. In particular the presence of significant amounts of divalent cations is undesirable.

Where the dispersions according to the invention are oil-in-water dispersions (i.e. water is the continuous phase), then the proportion of water in the composition may be for example greater than 85% by weight of total composition, e.g. 85% to 98%, preferably 85% to 90%.

The electrolyte is preferably selected so as to give a substantially neutral aqueous phase e.g. pH 6-8. It will be apparent that the electrolyte must not adversely affect the anionic surfactant, e.g. by causing it to form an insoluble salt or to hydrolyze. As indicated above, the presence of divalent cations, e.g. ions of Ca or Mg, will be undesirable. An example of a suitable electrolyte is NaCl.

The concentration of the electrolyte is in the range 0.01 to 0.1M, if the object is to produce oil-in-water dispersions.

The use of a relatively low concentration of electrolyte favours the production of oil-in-water dispersions, while higher concentrations favour the production of water-in-oil dispersions. The optimum concentration of electrolyte will depend on the specific electrolyte used, but can be determined by simple tests.

The dispersion of the present invention comprises a separate liquid phase of an incompatible silicone. The term "silicone" indicates an organic compound of silicon containing Si-O repeating units with the silicon atom carrying two organic groups; preferably the organic groups are methyl groups. Some liquid silicone compounds, e.g. certain copolymers containing alkylene oxide groups, act as surfactants so that they will disperse in water without the need to use a separate surfactant. Such self-dispersing silicones are not incompatible silicones as required by the present invention. The silicone compound is preferably one having a substantially linear chain of Si-O units.

The silicone liquid may consist substantially only of linear polydimethyl siloxane (PDMS), together with such quantities of low molecular weight cyclic dimethylsiloxanes as may be present in commercially available PDMS. The PDMS is preferably a linear polymer and has a viscosity in the range 5 x 10⁻⁷ m²/s to 10⁻⁴ m²/s (0.5 to 100 cS (centistokes)) at 25°C, more preferably 5 x 10⁻⁷ m²/s to 5 x 10⁻⁵ m²/s (0.5cS to 50 cS), most preferably 5 x 10⁻⁷ m²/s to 5 x 10⁻⁶ m²/s (0.5 to 5 cS).

The proportion of silicone in the dispersion is preferably in the range 0.1 to 10% by weight of the total dispersion (for oil-in-water dispersions).

The anionic surfactants are salts of diesters of sulfosuccinic acid. The sulfonate group provides a hydrophilic portion and the hydrophobic portion is provided by the groups linked to the carboxylic group to form the ester. Preferably both the hydrophobic groups have a branched carbon chain, and are preferably alkyl groups, unsubstituted by other groups or elements. An example of a specific anionic surfactant which may be used in the present invention is bis (2-ethylhexyl) sulfosuccinate, which is commercially available as the sodium salt under the trade name "Aerosol OT".

The anionic surfactant overall, if it comprises more than one anionic surfactant, preferably comprises only a single type of anionic surfactant, e.g. only bis alkyl sulfosuccinate salts. The present invention enable stable dispersions to be produced without the use of a co-surfactant. Preferably, the anionic surfactant is a single anionic surfactant with the only other components introduced with the surfactant being those inherently present in commercial materials as a consequence of the manufacturing process.

The concentration of anionic surfactant used is in the range of 5 to 100mM in water.

The temperature of the dispersion may vary, for example between 10° and 60°C, and is preferably in the range 20° to 40°C. The dispersion may be formed by bringing the silicone oil into contact with a solution of the surfactant in water containing the electrolyte and subjecting the mixture to gentle agitation. The dispersion may in some cases form spontaneously with minimum agitation.

### Modes of Carrying Out the Invention.

Two different methods were used to prepare the silicone oil-in-water dispersions.

### Method I (Single Phase Solubilization)

An aqueous solution of the anionic surfactant was prepared in electrolyte (according to the invention) or in water (comparative test), and the silicone oil was titrated into this solution slowly stirring the contents of the vessel while maintaining them at a constant temperature. A glass cell was used for the titration containing a side-arm and a rubber suba seal through which the oil was added via a microsyringe.

Sufficient time was allowed between additions for the oil to become solubilized in the surfactant aggregates which had formed in the surfactant solution. The maximum extent of solubilization was taken as the point at which a permanent turbidity remained or small oil droplets were seen resting on the aqueous solution surface.

### Method II (Multiphase solubilization)

In this method, equal volumes of oil and aqueous surfactant solution, either with electrolyte (according to the invention) or without electrolyte (comparative test), were introduced into a sealed glass vessel and mixed gently by inverting the sealed glass vessel and left to equilibriate at fixed temperature for at least two weeks. The contents of the vessel separated into an upper clear oil layer and a lower, clear (sometimes blueish) aqueous layer. The lower layer contains the oil-in-water dispersion.

### Comparative Test A

An experiment was carried out using the procedure of Method I. The surfactant was a commercially available product sold under the trade name "Aerosol OT" (the sodium salt of bis (2-ethylhexyl) sulfosuccinate) and was greater than 99% pure. The silicone oil was a commercially available polydimethyl siloxane fluid having a viscosity of 6.5 x 10⁻⁷ m²/s (0.65cS). A 3mM solution of surfactant was prepared in water which did not contain electrolyte. The experiment was carried out at 25°C. the maximum amount of silicone oil which could be introduced without producing a turbid dispersion corresponded to an R value of 0.5, where R is the mole ratio of oil to surfactant in the aqueous dispersion. The molecular weight of the silicone oil as given by the supplier was 164.

### Examples 1-2

An experiment was carried out as in comparative Test A but with the surfactant dissolved in water containing NaCl at a concentration of 0.05M (Example 1) or 0.075M (Example 2). The maximum amounts of silicone oil at which a stable dispersion ceased to be formed corresponded to R values of 1.25 (Example 1) and around 2 (Example 2).

### Example 3

An experiment was carried out as in comparative Test A but using a 40mM solution of surfactant containing NaCl at a concentration of 0.09M, and a temperature of 40°C. The maximum R value was around 6.

### Example 4

An experiment was carried out as in Example 3 except that the temperature was 60°C. The maximum R value was 3.5.

### Comparative Test B

An experiment was carried out as in Comparative Test A except that the surfactant concentration in the surfactant was 40mM surfactant, and the temperature was 30°C. The maximum R value was 1.

### Examples 5-6

Experiments were carried out as in Comparative Test B except that the surfactant solution contained NaCl at concentrations of 0.03M (Example 5) and 0.06 (M NaCl (Example 6). The maximum R values were 2.2 and 4 respectively.

Method I as described above has been used to make oil-in-water dispersions. It may be modified so as to produce water-in-oil dispersions when high electrolyte concentrations are used and the surfactant is sufficiently soluble in oil.

### Method Ia

The procedure is the same as Method I except that a solution of the anionic surfactant was prepared in silicone oil and an electrolyte comprising dissolved salt in water was titrated into the solution. The maximum extent of solubilization was taken as the point at which permanent turbidity remained.

### Example 7.

An experiment was carried out using Method Ia. The surfactant was that used in comparative Test A and as dissolved in the same commercial silicone oil (viscosity 6.5 x 10⁻⁷ m²/s (0.65cS) (PDMS)) as was used in comparative Test A to give a clear solution with a concentration of 40mM in PDMS. The water titrated into the solution of surfactant in oil contained NaCl at a concentration of 0.1M. The procedure was carried out at a temperature of 25°C. The maximum amount of aqueous electrolyte which could be introduced was 53 where R is the mole ratio of water to surfactant in the water-in-oil dispersion.

### Example 8.

An experiment was carried out as in Example 7 but using a 0.2M aqueous solution of NaCl and a temperature of 40°C. The corresponding R value was 48.

Method II can also be used to make water-in-oil dispersions. The only modification required is to use a sufficiently high concentration of electrolyte as the aqueous phase. The clear dispersion will then form in the upper oil layer instead of the lower aqueous layer.

### Industrial Applicability

The dispersions of the present invention are particularly useful as cleaners for glass and other hard surfaces. They may be used to deposit a layer of incompatible silicone as a layer on the surface to provide resistance to further soiling. They may be applied as a spray and subsequently a layer of dispersion may be spread across the surface by a spreading means, which may be a rubber blade, or a cloth. The surface may be allowed to dry by evaporation of the water or the surface may be wiped dry with absorbent materials.

The process for making the dispersions may be carried out using conventional manufacturing equipment and commercially available raw materials.

## Claims

1. An aqueous dispersion comprising:
water containing from 0.01 to 0.1M of a dissolved electrolyte, the water being substantially free of divalent cations;
a separate liquid phase of an incompatible silicone having a viscosity in the range 5x10⁻⁷ m²/s to 10⁻⁴ m²/s (0.5 to 100 centistokes) at 25°C;
and from 5 to 100mM of stabilizing anionic surfactant, wherein the anionic surfactant is a salt of a diester of sulfosuccinic acid, the anionic surfactant being the only surfactant present in the dispersion.

2. The dispersion according to claim 1 having a pH in the range 6 to 8.

3. The dispersion according to claim 1 wherein the dispersion is an oil-in-water dispersion.

4. The dispersion according to claim 1 wherein the incompatible silicone consists substantially only of a linear poly(dimethyl)silicone.

5. The dispersion according to claim 4 wherein the silicone has a viscosity in the range 5x10⁻⁷ m²/s to 10⁻⁴ m²/s (0.5 to 100 centistoke) at 25°C.

6. The dispersion according to claim 1 wherein the silicone is present in an amount from 0.1 to 10% by weight, based on total weight of the dispersion.

7. The dispersion according to claim 1 wherein the anionic surfactant contains a hydrophobic group comprising a branched carbon chain linked to each carboxylate group to form the diester.

8. A method of treating a surface by applying to the surface an aqueous dispersion according to claim 1.

9. The method according to claim 8 wherein a layer of the dispersion is applied to the surface, and the surface is then dried.

10. A process for forming an aqueous dispersion comprising water, a separate liquid phase of an incompatible silicone and a surfactant the process comprising:
(a) forming an aqueous phase by mixing water with from 0.01 to 0.1M dissolved electrolyte, the water being substantially free of divalent cations;
(b) introducing from 5 to 100mM of stabilizing anionic surfactant, wherein the anionic surfactant is a salt of a diester of sulfosuccinic acid into the aqueous phase;
(c) bringing liquid incompatible silicone having a viscosity in the range 5x10⁻⁷ m²/s to 10⁻⁴ m²/s (0.5 to 100 centistokes) at 25°C into contact with the aqueous phase; and
(d) wherein anionic surfactant is the only surfactant present in the dispersion.

11. A process for forming an aqueous dispersion comprising a separate continuous liquid phase of an incompatible silicone, water dispersed within the silicone, and a surfactant the process comprising:
(a) forming an aqueous phase by mixing water with from 0.01 to 0.1M of a dissolved electrolyte, the water being substantially free of divalent cations;
(b) forming a silicone oil phase by mixing an incompatible silicone having a viscosity in the range 5x10⁻⁷ m²/s to 10⁻⁴ m²/s (0.5 to 100 centistokes) at 25°C and from 5 to 100mM of stabilizing anionic surfactant wherein the anionic surfactant is a salt of a diester of sulfosuccinic acid;
(c) introducing the aqueous phase into the silicone oil phase with agitation; and
(d) wherein anionic surfactant is the only surfactant present in the dispersion.

## Patentansprüche

1. Wässrige Dispersion, umfassend:
Wasser, das 0,01 bis 0,1 M eines gelösten Elektrolyten enthält, wobei das Wasser praktisch frei von zweiwertigen Kationen ist;
eine separate flüssige Phase aus einem inkompatiblen Silikon mit einer Viskosität im Bereich vom 5 x 10⁻⁷ m²/s bis 10⁻⁴ m²/s (0,5 bis 100 Zentistokes) bei 25°C;
und 5 bis 100 mM eines stabilisierenden anionischen Tensids, wobei das anionische Tensid ein Salz eines Diesters der Sulfobernsteinsäure ist, und das anionische Tensid das einzige Tensid ist, das in der Dispersion vorliegt.

2. Dispersion nach Anspruch 1 mit einem pH-Wert im Bereich von 6 bis 8.

3. Dispersion nach Anspruch 1, worin die Dispersion eine Öl-in-Wasser-Dispersion ist.

4. Dispersion nach Anspruch 1, worin das inkompatible Silikon im wesentlichen nur aus einem linearen Poly(dimethyl)silikon besteht.

5. Dispersion nach Anspruch 4, worin das Silikon eine Viskosität im Bereich vom 5 x 10⁻⁷ m²/s bis 10⁻⁴ m²/s (0,5 bis 100 Zentistokes) bei 25°C hat.

6. Dispersion nach Anspruch 1, worin das Silikon in einer Menge von 0,1 bis 10 Gew.-%, bezogen auf das Gesamtgewicht der Dispersion, vorliegt.

7. Dispersion nach Anspruch 1, worin das anionische Tensid eine hydrophobe Gruppe enthält, die eine verzweigte Kohlenstoffkette umfasst, welche mit jeder Carboxylatgruppe verbunden ist, um den Diester zu bilden.

8. Verfahren zur Behandlung einer Oberfläche durch Auftragen einer wässrigen Dispersion nach Anspruch 1 auf die Oberfläche.

9. Verfahren nach Anspruch 8, worin eine Schicht der Dispersion auf die Oberfläche aufgebracht wird und die Oberfläche anschließend getrocknet wird.

10. Verfahren zur Bildung einer wässrigen Dispersion aus Wasser, einer separaten flüssigen Phase aus einem inkompatiblen Silikon und einem Tensid, wobei das Verfahren umfasst:
(a) Bildung einer wässrigen Phase durch Vermischen von Wasser mit 0,01 bis 0,1 M eines gelösten Elektrolyten, wobei das Wasser praktisch frei von zweiwertigen Kationen ist;
(b) Zugabe von 5 bis 100 mM eines stabilisierenden anionischen Tensids zur wässrigen Phase, wobei das anionische Tensid ein Salz eines Diesters der Sulfobernsteinsäure ist;
(c) Inkontaktbringen eines flüssigen, inkompatiblen Silikons mit einer Viskosität im Bereich vom 5 x 10⁻⁷ m²/s bis 10⁻⁴ m²/s (0,5 bis 100 Zentistokes) bei 25°C mit der wässrigen Phase; und
(d) worin das anionische Tensid das einzige Tensid ist, das in der Dispersion vorliegt.

11. Verfahren zur Bildung einer wässrigen Dispersion, umfassend eine separate, kontinuierliche flüssige Phase aus einem inkompatiblen Silikon, Wasser, welches im Silikon dispergiert ist, und ein Tensid, wobei das Verfahren umfasst:
(a) Bildung einer wässrigen Phase durch Vermischen von Wasser mit 0,01 bis 0,1 M eines gelösten Elektrolyten, wobei das Wasser praktisch frei von zweiwertigen Kationen ist;
(b) Bildung einer Silikonölphase durch Vermischen eines inkompatiblen Silikons mit einer Viskosität im Bereich vom 5 x 10⁻⁷ m²/s bis 10⁻⁴ m²/s (0,5 bis 100 Zentistokes) bei 25°C mit 5 bis 100 mM eines stabilisierenden anionischen Tesids, wobei das anionische Tensid ein Salz eines Diesters der Sulfobernsteinsäure ist;
(c) Zugabe der wässrigen Phase zur Silikonölphase unter Rühren; und
(d) worin das anionische Tensid das einzige Tensid ist, das in der Dispersion vorliegt.

## Revendications

1. Dispersion aqueuse comprenant:
de l'eau contenant de 0,01 à 0,1M d'un électrolyte dissous, l'eau étant sensiblement dépourvue de cations divalents ;
une phase liquide séparée d'un silicone incompatible ayant une viscosité dans la plage de 5 x 10⁻⁷ m²/s à 10⁻⁴ m²/s (0,5 à 100 centistokes) à 25°C ;
et de 5 à 100 mM d'un tensioactif anionique stabilisant, où le tensioactif anionique est un sel d'un diester d'acide sulfosuccinique, le tensioactif anionique étant le seul tensioactif présent dans la dispersion.

2. Dispersion selon la revendication 1 ayant un pH dans la plage de 6 à 8.

3. Dispersion selon la revendication 1 où la dispersion est une dispersion huile dans eau.

4. Dispersion selon la revendication 1 où le silicone incompatible consiste sensiblement seulement en un poly(diméthyl)silicone linéaire.

5. Dispersion selon la revendication 4 où le silicone a une viscosité dans la plage de 5 x 10⁻⁷ m²/s à 10⁻⁴ m²/s (0,5 à 100 centistokes) à 25°C.

6. Dispersion selon la revendication 1 où le silicone est présent en une quantité de 0,1 à 10 % en poids par rapport au poids total de la dispersion.

7. Dispersion selon la revendication 1 où le tensioactif anionique contient un groupe hydrophobe comprenant une chaîne carbonée ramifiée lié à chaque groupe carboxylate pour former le diester.

8. Procédé de traitement d'une surface par application à la surface d'une dispersion aqueuse selon la revendication 1.

9. Procédé selon la revendication 8 où une couche de la dispersion est appliquée à la surface et la surface est ensuite séchée.

10. Procédé pour former une dispersion aqueuse comprenant de l'eau, une phase liquide séparée d'un silicone incompatible et un tensioactif, le procédé comprenant :
(a) la formation d'une phase aqueuse par mélange d'eau avec de 0,01 à 0,1 M d'électrolyte dissous, l'eau étant sensiblement dépourvue de cations divalents ;
(b) l'introduction de 5 à 100 mM d'un tensioactif anionique stabilisant, où le tensioactif anionique est un sel d'un diester d'acide sulfosuccinique, dans la phase aqueuse ;
(c) la mise en contact avec la phase aqueuse d'un silicone incompatible liquide ayant une viscosité dans la plage de 5 x 10⁻⁷ m²/s à 10⁻⁴ m²/s (0,5 à 100 centistokes) à 25°C ; et
(d) où le tensioactif anionique est le seul tensioactif présent dans la dispersion.

11. Procédé pour former une dispersion aqueuse comprenant une phase liquide continue séparée d'un silicone incompatible, de l'eau dispersée dans le silicone, et un tensioactif, le procédé comprenant :
(a) la formation d'une phase aqueuse par mélange d'eau avec de 0,01 à 0,1 M d'un électrolyte dissous, l'eau étant sensiblement dépourvue de cations divalents ;
(b) la formation d'une phase huileuse de silicone par mélange d'un silicone incompatible ayant une viscosité dans la plage de 5 x 10⁻⁷ m²/s à 10⁻⁴ m²/s (0,5 à 100 centistokes) à 25°C et de 5 à 100 mM d'un tensioactif anionique stabilisant où le tensioactif anionique est un sel d'un diester d'acide sulfosuccinique ;
(c) l'introduction de la phase aqueuse dans la phase huileuse de silicone sous agitation ; et
(d) où le tensioactif anionique est le seul tensioactif présent dans la dispersion.
